Europäisches Patentamt

(19) European Patent Office

Office européen des brevets

(11) **EP 0 715 494 B1**

(12) **EUROPEAN PATENT SPECIFICATION**

(45) Date of publication and mention
of the grant of the patent:
**14.04.1999 Bulletin 1999/15**

(21) Application number: **94922385.3**

(22) Date of filing: **29.07.1994**

(51) Int. Cl.$^6$: **A01N 25/20**, A01N 25/18

(86) International application number:
**PCT/KR94/00101**

(87) International publication number:
**WO 95/03696 (09.02.1995 Gazette 1995/07)**

(54) **SMOKE GENERATOR CARRYING AGRICULTURAL CHEMICALS, AND PROCESS FOR PREPARATION THEREOF**

RAUCHENTWICKLER FÜR LANDWIRTSCHAFTLICHE CHEMIKALIEN UND VERFAHREN ZU SEINER HERSTELLUNG

FUMIGATEUR A PRODUTS AGROCHIMIQUES ET SON PROCEDE DE PREPARATION

(84) Designated Contracting States:
**DE ES FR GB IT**

(30) Priority: **29.07.1993 KR 9314507**

(43) Date of publication of application:
**12.06.1996 Bulletin 1996/24**

(73) Proprietor:
**KOREA RESEARCH INSTITUTE OF CHEMICAL TECHNOLOGY**
**Taejeon 305-606 (KR)**

(72) Inventors:
• **CHO, Kwang, Yung**
  **Daejeon 305-340 (KR)**
• **YU, Ju, Hyun**
  **ng Yusung-ku, TAEJEON (KR)**
• **LIM, He, Kyung**
  **138-805, Hanbit Apartment**
  **Taejeon 305-333 (KR)**

(74) Representative: **Hale, Peter et al**
  **Kilburn & Strode**
  **20 Red Lion Street**
  **London WC1R 4PJ (GB)**

(56) References cited:
**CN-A- 1 067 784**　　　**DD-A- 264 335**
**JP-A-52 054 021**

• **PATENT ABSTRACTS OF JAPAN, unexamined applications, section C, Vol. 4, No. 93, issued 05 July 1980; The Patent Office Japanese Government, page 104 C 17, abstracts no. 55-57 504 & 55-57 505 (YOSHIO KATSUTA).**
• **PATENT ABSTRACTS OF JAPAN, unexamined applications, section C, Vol. 6, No. 266, issued 25 December 1982; The Patent Office Japanese Government, page 117 C 142, abstract no. 57-158 705 (AASU SEIYAKU K.K.).**
• **PATENT ABSTRACTS OF JAPAN, unexamined applications, section C, Vol. 9, No. 96, issued 25 April 1985; The Patent Office Japanese Government, page 110 C 278, abstract no. 59-227 808 (BUNKA NENRIYOU K.K.).**
• **PATENT ABSTRACTS OF JAPAN, unexamined applications, section C, Vol. 12, No. 467, issued 07 December 1988, The Patent Office Japanese Government, page 20 C 550, abstract no. 63-185 908 (SANKO KAGAKU KOGYO K.K.).**

Remarks:
The file contains technical information submitted after the application was filed and not included in this specification

EP 0 715 494 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

FIELD OF THE INVENTION

The present invention relates to a smoke generator which carries agricultural chemicals and is effective to control various plant pathogens, insect pests and weeds in closed spaces such as a vinyl plastic house, a glasshouse, etc. (hereinafter, refer to "a greenhouse"). More particularly, the present invention relates to a smoke generator for distributing agrochemicals efficiently by emitting smoke, when burning, in the air of the greenhouse, and furthermore, it can be applied to the various kinds of agrochemicals.

DESCRIPTION OF THE PRIOR ART

In recent years, as a pattern of food life being changed, the demands for agricultural products which are out of season, are greatly increased. Accordingly, the agricultural products such as vegetables, fruits, flowers, etc., harvested in the field are decreasing, while those harvested in a greenhouse are greatly increasing. Furthermore, the agricultural products which are early harvested in the greenhouse are higher in price than those harvested in the field. Therefore, vegetables such as strawberry are rarely produced in the field anymore in Korea. That is to say, the area of greenhouse cultivation is increasing, which tended to increase the use of the agricultural chemicals and the working time in the greenhouse.

The spray preparation is the most popular formulation which is usable in a greenhouse, because of the limited pesticide formulation technology. However, the spray of liquid preparation is time-consuming work, and might be dangerous in the case of contact or inhalation of the agrochemicals. Furthermore, the stains on plants or fruits caused by spray droplets of liquid preparations result in reduction in the prices of agricultural products. And also an excessive amount of water for diluting the liquid preparations makes air in the greenhouse over-humid to bolster up the population of the insect pests or plant pathogens.

The conventional formulations of agrochemicals being used in the closed spaces include fumigant, mist generators, and smoke generator, etc. The smoke generator is very convenient for use. That is to say, it has the following advantages; the use of the smoke generator is extremely time and labour-saving method for applying agrochemicals to the target; since the worker can get out of the house immediately after igniting the smoke generator located in a greenhouse, he is free from poisoning by the agrochemicals; since the agrochemicals are distributed by smoke, the reduction in the price of agricultural products due to the stains or scars by spray preparation thereof can be avoided; and since water is not required in the use of the smoke generator, the incidence of insect pests and plant pathogens is decreased.

Since the smoke generator itself is combustible, the active ingredient in the formulation must be stable to heat and must be converted into smoke without decomposition. As to materials being used for the smoke generator, exothermic materials such as nitroguanidine, nitrocellulose, etc., oxidising agents for promoting combustion such as perchlorate, chlorate, chlorite, etc. and combustion controlling agents for regulating the combustion of the smoke generator such as carbon powder, starch, saccharides, cellulose, etc. are illustrated.

The smoke generator may be formulated by the conventional method. For example, the active ingredient of agricultural chemicals is mixed with powdered explosives and adjuvants, and the resulted mixture is moulded into the granules, rods, sticks, the cylindrical plates, etc.

The conversion rate into smoke of active ingredient in the smoke generator can be measured by collecting the smoke generated from the unit weight of the sample, and analyzing the active ingredient quantitatively.

Most of the smoke generators being sold in the market have been formulated in the form of powders, granules or rods. For preparing the conventional smoke generators, the exothermic materials such as nitrocellulose, the antiflame agent such as melamine, and an igniter for igniting the smoke generator have been used, but these materials cause a rise in the production cost. Since the exothermic material, such as nitrocellulose used in the conventional smoke generator, is a kind of explosive, it may cause a danger of fire or explosion during production thereof. Furthermore, since the combustion temperature is as low as about 250-400°C, the kinds of agricultural chemicals can be applied are very limited. DD-A-264335 shows a smoke generator according to the precharactersing portion of claim 1.

Accordingly, the development of improved smoke generators solving the above defects has been desired.

The present inventors have undertaken earnest studies in order to solve the above problems in the prior art, and as a result, have found that the conversion rate into smoke of active ingredient in the smoke generator can be raised by mixing the agricultural chemicals with the combustible carriers and the oxidizing agents properly, and by moulding the resulted mixture into the sticks, rods, granules or powders, etc. The smoke generator prepared on the basis of such a finding is very efficient in controlling the insect pests and plant pathogens in the greenhouse, which led to the completion of the invention.

## SUMMARY OF THE INVENTION

Accordingly, one object of the present invention is to provide a novel smoke generator consisted of the agricultural chemicals-combustible carrier-oxidizing agent-binder, which improves the conventional smoke generators.

The other object is to provide a process for preparing a smoke generator, which comprises by mixing the agricultural chemicals, the combustible carrier, the oxidizing agent, and the binder, and by moulding the resulting mixture into sticks, granules or powders.

According to the present inventon, there is provided a smoke generator as set out in claim 1.

The combustible carriers are the dried and pulverized bi-products or waste materials, whose main component is cellulose, of agriculture, specifically rice chaff, which is dried at 60 to 80°C for 4 to 12 hours and pulverized through 30 mesh. The dried and pulverized rice chaff is the most preferable in the aspect of generation of smoke and moldability.

In the present invention, for an oxidizing agent which promotes the combustion of the agricultural chemicals and the combustible carriers, an organic or inorganic substance being able to be decomposed and to generate oxygen at a given temperature can be illustrated. The specific examples thereof are nitrocellulose, the sodium or potassium salts of chlorite, chlorate, perchlorate, nitrite, nitrate, such as $NaClO_2$, $NaClO_3$, $NaClO_4$, $KClO_3$, $KClO_4$, $NaNO_2$, $KNO_2$, $KNO_3$, etc. The oxidizing agent may be used singly or in combination.

The oxidizing agent is added in an amount of 5 to 30% by weight of the total composition of the smoke generator.

No particular limitation is imposed on pesticides to be used in the present invention. Examples of the pesticides in the present invention are fungicides such as benzimidazoles, dicarboximide, phenylamides, imidazoles, triazoles, morpholines, etc.; insecticides such as organophosphorous, synthetic pyrethroides, carbamates, etc. The specific examples of the above include benzimidazoles derivatives such as 4,4-(o-phenylene)bis(3-thioalophanate) (thiophanate-methyl), etc.; dicarboximide derivatives such as N-(3,5-dichlorophenyl)-1,2-dimethylcyclopropan-1,2-dicarboximide(procymidone), (RS)-3-(3,5-dichlorophenyl)-5-methyl-5-vinyl-1,3-oxazolidine-2,4-dione(vinclozolin), etc.; phenyl amides such as methyl N-(2-methoxyacetyl)-N-(2,6-xylyl)-DL-alaninate(metalaxyl), etc.; pyrimidine derivatives such as (±)2,4'-=dichloroa-α-(pyrimidine-5-yl)benzhydryl alcohol(fenarimol), (±)2-=chloro-4'-α-(pyrimidine-5-yl)benzhydryl alcohol(nuarimol), etc.; imidazole derivatives such as N-=propyl-N-[2-(2,4,6-trichlorophenoxy)ethyl]-imidazole-1-carboxamide (prochloraz), triazole derivatives such as bis(4-fluorophenyl)(1H-1,2,4-triazole-1-ylmethyl)silane (flusilazole), 2-p-chlolophenyl-2-(1H-1,2,4-triazole-1-ylmethyl)hexanenitrile(myclobutanil), etc.; morpholine derivatives such as (E,Z)4-[3-(4-chlorophenyl)-3-(3,4-dimethoxyphenyl)acryloyl]morpholine (dimethomorph), etc.; other fungicides such as N-(1,1,2,2-tetrachloroethylthio)phthalimide(captafol), N-trichloromethylthio)cyclohex-4-ene-1,2-dicarboximide (captan), N-(trichlomethylthio)phthalimide (folpet), N-dichlorofluoromethansulfenyl-N',N'-dimethyl-N-phenylsulfamide(dichlofluanid), etc.; organophosphorous pesticides such as 2,2-dichlorovinyl dimethyl phosphate (DDVP), O-=4-bromo-2-chlorophenyl O-ethyl S-propyl phosphoro -thioate (profenofos), O,S-dimethyl acetyl phosphoramidothioate(acephate), etc. ; synthetic pyrethroid insecticides such as 2-methylbiphenyl-3-ylmethyl (Z)(1RS)-cis-3-(2-chloro-3,3,3-trifluoroprop-1=enyl)-2,2-dimethylcyclopropancarboxylate(bifenthrin), (s)-α-cyano-3-phenoxybenzyl (1R)-cis-3-(2,2-dibromovinyl)-2,2-=dimethylcyclopropancarboxylate (deltamethrin), etc.; carbamates derivatives such as S-methyl N-(methylcarbamoyl- oxy)thioacetimidate(methomyl), etc.

In addition, most of the agricultural chemicals except those having the boiling point beyond 710°C can be used as an active ingredient for the present smoke generator.

Especially, the agricultural chemicals can be used singly or in combination in the present smoke generator. The active ingredients are generally used in an amount of 0.01 to 30% of total weight of the present smoke generator.

The binders for moulding the powdery mixture containing the agricultural chemicals and the combustible carriers are water- soluble or oil-soluble materials such as polyvinyl alcohol, carboxymethylcellulose, starch, glue, gelatin, stearyl alcohol, casein, etc., reactive binders such as resin adhesives, and polymers being fusible below 150°C, etc. The amount of the binders incorporated may vary from 5 to 30% by weight, preferably 5 to 25% by weight.

In addition, stabilizers with various functions such as the anti-decomposition of active ingredients, improving agents for physical properties of formulation, a coloring agent, and synthetic silica as filler for liquid materials may be added as adjuvants.

The present smoke generator can be produced with low cost, since it consists of combustible carriers such as the bi-products or wastes from the agriculture or forestry and common oxidizing agents. And it is not necessary to use any heating apparatus for the conversion of agrochemicals into smoke or an igniter for the smoke generator.

Since it is possible to select the kind or amount of oxidizing agent for controlling the combustion temperature or speed of the smoke generator, most kinds of agricultural chemicals can efficiently be converted into smoke, and these finally can be used in the present smoke generator. And for these reasons, it is possible to make the present smoke generator in the form of sticks, granules, powders, etc.

In addition, control effects on insect pests and plant pathogens can be enhanced, because the conversion rate into smoke of active ingredient in the present smoke generator is higher than that of the conventional smoke generator.

EXAMPLES

More detail descriptions are explained by examples. In the examples, "the part" and "%" mean the part by weight and % by weight respectively.

Example 1

Five hundreds parts of the powdered rice chaff were added to 200 parts of the powdered procymidone and then mixed. To the other vessel, 150 parts of sodium perchlorate (or 130 parts of sodium chlorate) and 150 parts of powdered glue were charged, and then dissolved by adding the proper amount of hot distilled water. To this, the prepared procymidone-chaff mixture was added and then kneaded. The kneaded mixture was moulded into sticks by the extruder having 1.4cm in diameter and 4cm in length, and dried at 80°C for 3 hours, thereby the procymidone smoke generator was obtained.

Example 2

Five hundreds and twenty parts of powdered rice chaff were added to 200 parts of powdered dichlofluanid and then mixed. To the other vessel, 130 parts of sodium chlorate and 150 parts of powdered glue were charged, and then dissolved by adding the proper amount of hot distilled water. To this, the prepared dichlofluanid-rice chaff mixture was added and then kneaded. The kneaded mixture was moulded into sticks by the extruder having 1.4cm in diameter and 4cm in length, and dried at 80°C for 3 hours, thereby the dichlofluanid smoke generator was obtained.

Example 3

Five hundreds parts of powdered rice chaff were added to 200 parts of powdered dimethomorph, and then mixed. To the other vessel, 150 parts of sodium chlorate(or potassium chlorate) and 150 parts of powdered glue were charged, and then dissolved by adding the proper amount of hot distilled water. To this, the prepared dichlofluanid-rice chaff mixture was added and then kneaded. The kneaded mixture was moulded into sticks by the extruder having 1.4cm in diameter and 4cm in length, and dried at 80°C for 3 hours, thereby the dimethomorph smoke generator was obtained.

Example 4

The flusilazole smoke generator was prepared using the same method of example 2 by using powdered flusilazole instead of dichofluanid.

Example 5

The folpet smoke generator was prepared using the same method of example 2 by using powdered folpet instead of dichofluanid.

Example 6

Four hundreds and ninety parts of powdered rice chaff were added to 200 parts of powdered chlorothalonil, and then mixed. To the other vessel, 160 parts of sodium chlorate and 150 parts of powdered glue were charged, and then dissolved by adding the proper amount of hot distilled water. To this, the prepared chlorothalonil-rice chaff mixture was added and then kneaded. The kneaded mixture was moulded into sticks by the extruder having 1.4cm in diameter and 4cm in length, and dried at 80°C for 3 hours, thereby the chlorothalonil smoke generator was obtained.

Example 7

Five hundreds and thirty parts of powdered rice chaff were added to 200 parts of powdered metalaxyl, and then mixed. To the other vessel, 120 parts of sodium chlorate and 150 parts of powdered glue were charged, and then dissolved by adding the proper amount of hot distilled water. To this, the prepared metalaxyl-rice chaff mixture was added and then kneaded. The kneaded mixture was moulded into sticks by the extruder having 1.4cm in diameter and 4cm in length, and dried at 60°C for 4 hours, thereby the metalaxyl smoke generator was obtained.

Example 8

Five hundreds and ten parts of powdered rice chaff were added to 200 parts of myclobutanil, and then mixed at 70°C. To the other vessel, 140 parts of sodium chlorate and 150 parts of powdered glue (or 60 parts of carboxymethyl cellulose) were charged, and then dissolved by adding the proper amount of hot distilled water. To this, the prepared myclobutanil-rice chaff mixture was added and then kneaded. The kneaded mixture was moulded into sticks by the extruder having a diameter of 1.4cm and length of 4cm, and dried at 55°C for 12 hours, thereby the myclobutanil smoke generator was obtained.

Example 9

Five hundreds and twenty parts of powdered rice chaff were added to 200 parts of DDVP, and then mixed. To the other vessel, 130 parts of sodium chlorate and 150 parts of powdered glue were charged, and then dissolved by adding the proper amount of hot distilled water. To this, the prepared DDVP-rice chaff mixture was added and then kneaded. The kneaded mixture was moulded into sticks by the extruder having 1.4cm in diameter and 4cm in length, and dried at 40°C for 12 hours, thereby the DDVP smoke generator was obtained.

Example 10

Five hundreds parts of powdered rice chaff were added to 200 parts of profenofos, and then mixed. To the other vessel, 150 parts of sodium chlorate and 150 parts of powdered glue were charged, and then dissolved by adding the proper amount of hot distilled water. To this, the prepared profenofos-rice chaff mixture was added and then kneaded. The kneaded mixture was moulded into sticks by the extruder having a diameter of 1.4cm and length of 4cm, and dried at 60°C for 4 hours, thereby the profenofos smoke generator was obtained.

Example 11

Thirteen point four parts of bifenthrin was dissolved in a proper amount of acetone. To this, 666.6 parts of powdered rice chaff were added, mixed, and dried under the reduced pressure. To the other vessel, 120 parts of sodium chlorate and 200 parts of powdered glue were charged, and then dissolved by adding the proper amount of hot distilled water. To this, the prepared bifenthrin-rice chaff mixture was added and then kneaded. The kneaded mixture was moulded into sticks by the extruder having 1.4cm in diameter and 4cm in length, and dried at 55°C for 12 hours, thereby the bifenthrin smoke generator was obtained.

Example 12

Six hundreds parts of powdered rice chaff were added to 100 parts of powdered methomyl and then mixed. To the other vessel, 150 parts of sodium chlorate and 150 parts of powdered glue were charged, and then dissolved by adding the proper amount of hot distilled water. To this, the prepared methomyl-rice chaff mixture was added and then kneaded. The kneaded mixture was moulded into sticks by the extruder having 1.4cm in diameter and 4cm in length, and dried at 60°C for 4 hours, thereby the methomyl smoke generator was obtained.

Example 13

Five hundreds and ninety parts of powdered rice chaff were added to 50 parts of myclobutanil and 40 parts of bifenthrin, and then mixed at 80°C. To the other vessel, 120 parts of sodium chlorate and 200 parts of powdered glue were charged, and then dissolved by adding the proper amount of hot distilled water. To this, the prepared myclobutanil-bifenthrin-rice chaff mixture was added and then kneaded. The kneaded mixture was moulded into sticks by the extruder having 1.4cm in diameter and 4cm in length, and dried at 60°C for 4 hours, thereby the myclobutanil-bifenthrin smoke generator was obtained.

Example 14

Six hundreds and twenty parts of powdered rice chaff were added to 50 parts of myclobutanil, and then mixed at 70°C. To the other vessel, 130 parts of sodium chlorate and 200 parts of powdered glue were charged, and then dissolved by adding the proper amount of hot distilled water. To this, the prepared myclobutanil-rice chaff mixture was added and then kneaded. The kneaded mixture was granulated by the extrusion granulator, and dried at 60°C for 2 hours. The resulting granules were filled into tea bag and the bag was sealed, thereby the myclobutanil smoke generator was obtained.

Example 15 (Comparative)

Eight hundreds and twenty parts of sawdust were added to 50 parts of myclobutanil, and then mixed at 70°C. To the other vessel, 130 parts of sodium chlorate were charged, and then dissolved by adding the proper amount of distilled water. To this, the prepared myclobutanil-sawdust mixture was added and then mixed. This mixture was dried at 60°C for 2 hours, and were filled into tea bag and the bag was sealed, thereby the myclobutanil smoke generator was obtained

Example 16 (Comparative)

Six hundreds and twenty parts of powdered corncob pith were added to 50 parts of myclobutanil, and then mixed at 70°C . To the other vessel, 130 parts of sodium chlorate and 200 parts of powdered glue were charged, and then dissolved by adding the proper amount of hot distilled water. To this, the prepared myclobutanil-corncob pith mixture was added and then kneaded. The kneaded mixture was molded into the sticks by the extruder having a diameter of 1.4cm and length of 4cm, and dried at 60°C for 4 hours, thereby the myclobutanil smoke generator was obtained.

Example 17 (Comparative)

Six hundreds and twenty parts of sawdust were added to 50 parts of myclobutanil and then mixed at 70°C. To the other vessel, 130 parts of sodium chlorate were charged, and then dissolved by adding the proper amount of distilled water. To this, the prepared myclobutanil-sawdust mixture was added, mixed, and dried at 60°C for 2 hours. To this, 200 parts of powdered stearyl alcohol were added. The resulted mixture was moulded into tablets and rods at 65 to 70°C and kept cool, thereby the myclobutanil smoke generator was obtained.

Example 18

Four hundreds parts of powdered rice chaff were added to 200 parts of powdered procymidone and then mixed. To the other vessel, 250 parts of wet-milled nitrocellulose and 150 parts of powdered glue were charged, and then dissolved by adding the proper amount of hot distilled water. To this, the prepared procymidone-rice chaff mixture was added and then kneaded. The kneaded mixture was granulated by the extrusion granulator, and dried at 60°C for 2 hours. The resulted granules was filled into the tea bag and the bag was sealed, thereby the procymidone smoke generator was obtained.

Alternatively, the above kneaded mixture was moulded into sticks by the extruder having a diameter of 1.4cm and length of 4cm, and dried at 60°C for 4 hours, thereby the procymidone smoke generator was obtained.

In order to evaluate the conversion rate of active ingredient into smoke and control effect of smoke generator on insect pests and plant pathogens and to compare with commercial formulations, the conventional smoke generators and wettable powders were purchased and used as the following comparative examples.

Comparative example 1

Sumilex© granular smoke generator (Dongbang Agro, Co., Ltd. Korea; active ingredient: procymidon 30%) and Sumilex© wettable powder (Dongbang Agro, Co., Ltd. Korea; active ingredient: procymidon 50%) were used as control formulations in evaluating the conversion rate into smoke of active ingredient in the smoke generator and the control effect on gray mold fungus.

Comparative example 2

Uparen© granular smoke generator (Hannong, Co., Ltd. Korea; active ingredient: dichlofluanid 40%) and Uparen© wettable powder (Hannong, Co., Ltd. Korea; active ingredient: dichlofluanid 50%) were used as control formulations in evaluating the conversion rate into smoke of active ingredient in the smoke generator and the control effect on gray mold fungus.

Comparative example 3

Tasta© granular smoke generator (Hannong, Co., Ltd. Korea; active ingredient: bifenthrin 4%) was used as control formulation in measuring the conversion rate into smoke of active ingredient in the smoke generator.

Comparative example 4

Dimethomorph wettable powder (active ingredient: dimthomorph 50%) was used as control formulation for evaluating the control effect on tomato late blight fungus.

Comparative example 5

Daconil® wettable powder(Kyongnong Co., Ltd. Korea; active ingredient: chlorothalonil 75%) was used as control formulation for evaluating the control effect on tomato late blight fungus.

Comparative example 6

Ridomil® wettable powder(Kyongnong Co., Ltd. Korea; active ingredient: metalaxyl 25%) was used as a control formulation for evaluating the control effect on tomato late blight fungus.

Comparative example 7

Profenofos(95.5%) was dissolved by triton X-100 (0.01%)-acetone (10%) aqueous solution and used as a control formulation for evaluating the control effect on the cotton aphid.

Experimental example 1( experiment for measuring the conversion rate of active ingredient into smoke of the smoke generator)

The conversion rate into smoke of active ingredient in the smoke generators prepared in the above examples were measured by the following method; first of all, the content of active ingredient in smoke generator was measured by instrumental analysis. The active ingredient collection apparatus, which is consisted of the combustion chamber, condenser for cooling the hot smoke, filtering module, 3 gas-washing bottles, the trap for liquefying the vaporized solvent and vacuum pump, was installed and the proper solvent such as acetone was charged into the gas-washing bottles to dissolve the active ingredient. Then a piece of smoke generator corresponding to 400 mg of active ingredient was ignited by using the igniting paper and put into the combustion chamber. The generated smoke was collected by operating the vacuum pump till the combustion was completed. The solvent in the gas-washing bottles was collected into the evaporating flask, and all parts of apparatus contacted with smoke were washed by the clean solvent, and added to the evaporating flask. Then, the evaporating flask was dried to remove the solvent under the reduced pressure. To this, the internal standard solution was added to dissolve the residue of flask. The concentration of active ingredient in the solution was analyzed quantitatively by HPLC or gas chromatography. The conversion rate into smoke of active ingredient in the smoke generator was calculated by the following equation(1).

$$\text{Conversion rate(\%)}= \frac{\text{the amount of active ingredient collected by smoke}}{\text{the amount of active ingredient in smoke generator}} \times 100 \qquad (1)$$

The results are shown in Table 1.

Table 1

| Tested preparation | Active ingredient | Conversion rate |
|---|---|---|
| example 1 | procymidone | 90%> |
| example 2 | dichlofluanid | 45%> |
| example 3 | dimethomorph | 90%> |
| example 4 | flusilazole | 90%> |
| example 5 | folpet | 90%> |
| example 6 | chlorothalonil | 75%> |
| example 7 | metalaxyl | 90%> |
| example 9 | DDVP | 50%> |

Table 1 (continued)

| Tested preparation | Active ingredient | Conversion rate |
| --- | --- | --- |
| example 10 | profenofos | 60%> |
| example 11 | bifenthrin | 90%> |
| example 12 | methomyl | 20%> |
| example 13 | myclobutanil | 85%> |
|  | bifenthrin | 90%> |
| example 14 | myclobutanil | 85%> |
| example 15 (Comparative) | myclobutanil | 75%> |
| example 16 (Comparative) | myclobutanil | 75%> |
| example 17 (Comparative) | myclobutanil | 75%> |
| example 18 | procymidone | 85%> |
| comp. example 1 | procymidone | 80%> |
| comp. example 2 | dichlofluanid | 40%> |
| comp. example 3 | bifenthrin | 75%> |

Control effect of the present smoke generator on insect pests and plant pathogens was evaluated by the following methods.

Experimental example 2 (control effect on cucumber gray mold fungus and the test thereof)

Control effect of the present smoke generator on *Botrytis cinerea* and phytotoxic effect on cucumber plants were evaluated.

Cucumber seeds(Bakdadagi No. 1, Hannong Co., Ltd.) were sowed in the pot(5cm in diameter, 4.5cm in height) filled with the culture soil and were incubated in a greenhouse for two weeks. When cucumber plants were at the second-leaf stage, these were transplanted to Wagner's pot(1/5,000 a.) and grown up for five weeks to about 150 cm in height. A vinyl plastic house was installed and divided by vinyl plastic sheet to make 15 experimental plots of 500 cm in length, 125 cm in width and 165 cm in height ( 5 replications of control treatment, 5 replications of the present smoke generator treatment, 5 replications of the conventional smoke generator treatment for another control), and 10 pots of the adult cucumber plants were placed at each plot.

As a control, the spray solution of procymidone was prepared by the dilution of 1,000 times(the recommended concentration of active ingredient as described in The Pesticide User's Manual published by The Korean Pesticide Industrial Society) with commercial wettable powder(the comparative example 1), and to this, the spreader was added. Five hundreds ml of resulting preparation was sprayed to cucumber plants of each control plot regularly. To another plots, 1.25 g( dose equal to active ingredient contained in the 500 ml of the above spray solution) of the present smoke generator obtained from the example 1 was placed, and to the other plots, 0.833 g( dose equal to active ingredient contained in 500 ml of the above spray solution) of the conventional smoke generator was placed and ignited by match, and the test plots were sealed for the smoke generated in order not to be leaked out.

The spray solution of dichlofluanid was prepared by the dilution of 606 times( the recommended concentration of active ingredient as described in The Pesticide User's Manual published by The Korean Pesticide Industrial Society) with commercial wettable powder (the comparative example 2), and to this, the spreader was added. Five hundreds ml of resulted preparation was sprayed to cucumber plants of each control plot regularly. To another plots, 2.06 g of the present smoke generator obtained from the example 2 was placed, and to the other plots, 1.03 g(dose equal to the active ingredient contained in the present smoke generator) of the conventional smoke generator was placed and ignited by match, and the test plots were sealed for the smoke generated in order not to be leaked out.

After treating the agricultural chemicals for 12 hours, all the second-leaf stage cucumber plants were collected. The spore suspension($3.0 \times 10^6$ spores/ml), prepared from the culture of *Botrytis cinerea* on the PDA (potato dextrose agar), was inoculated by spraying on the both pre-treated and non-treated cucumber plants with the agricultural chemicals. These cucumber plants were placed in the wet and dark chamber( relative humidity: over 90%) for three to four days, and then the generated spotted area on the leaves of cucumber plants were rated and also the phytotoxicity by the agricultural chemicals were evaluated by the naked eyes. The control values were calculated by the following equation and the control effect obtained from statistics are shown in Table 2.

$$\text{Control value}= \frac{\text{spotted area of non-treated group - spotted area of treated group}}{\text{spotted area of non-treated group}} \times 100 \qquad (2)$$

Table 2

| Active ingredient | Preparation | Control effect | Phytotoxicity |
|---|---|---|---|
| procymidone | example 1 | +++ | - |
| | conv. sg* | ++ | - |
| | comm. wp** | +++ | - |
| dichlofluanid | example 2 | ++ | - |
| | conv. sg* | + | - |
| | comm. wp** | +++ | - |
| note)<br>+++ : 100%<br>++ : 90 to 99%<br>+ : 80 to 89%<br>- : no phytotoxicity. | | | |

*: conventional smoke generator.
**: commercial wettable powder.

Experimental example 3( control effect on tomato late blight fungus and the test thereof)

Using the smoke generators obtained from examples 2, 6, and 7, and the wettable powders obtained from comparative examples 4, 5 and 6, the control effect on tomato late blight fungus and phytotoxicity by the agricultural chemicals were evaluated.

Tomato seeds were sown in the pots(diameter: 5 cm, height: 4.5 cm) filled with soil, and grown up in a greenhouse to the second-leaf stage. The second-leaf stage tomato plants were transplanted to Wagner's pots(1/5,000 a.) and grown up for five weeks to about 90 cm in height. The 10 experimental plots which are the same size as used in the above experimental example 2( 5 replications of control treatment, and 5 replications of the present smoke generator treatment) were prepared, and the 10 pots of adult tomato plants and 5 pots of second-leaf stage tomato plants were placed at each plot.

As a control, the spray solution of dimethomorph was prepared by the dilution of 2,000 times(the recommended concentration of active ingredient as described in the prescription of the manufacturer) with self-prepared wettable powder(comparative example 4), and to this, the spreader was added. Five hundreds ml of resulted preparation was sprayed to tomato plants in each control plot regularly. To the other plots, 0.625 g(dose equal to the active ingredient contained in 500 ml of the above spray solution) of the present smoke generator obtained from the example 3 was placed and ignited by match, and the test plots were sealed for the smoke generated in order not to be leaked out.

The spray solution of chlorothalonil was prepared by the dilution of 606 times( the recommended concentration of active ingredient as described in The Pesticide User's Manual published by The Korean Pesticide Industrial Society) with commercial wettable powder( comparative example 5), and to this, the spreader was added. Five hundreds ml of resulted preparation was sprayed to tomato plants in each control plot regularly. To the other plots, 3.095 g of the present smoke generator obtained from the example 6 was placed and ignited by match, and the test plots were sealed for the smoke generated in order not to be leaked out.

The spray solution of metalaxyl was prepared by the dilution of 1,000 times(the recommended concentration of active ingredient as described in The Pesticide User's Manual published by The Korean Pesticide Industrial society) with commercial wettable powder( comparative example 6), and to this, the spreader was added. Five hundreds ml of resulted preparation was sprayed to tomato plants in each control plot regularly. To the other plots, 0.625 g of the present smoke generator obtained from the example 7 was placed, and ignited by match, and the test plots were sealed for the smoke generated in order not be leaked out.

After treating the agricultural chemicals for 12 hours, all the second-leaf stage tomato plants were collected.

The zoospore suspension($3.0 \times 10^5$ zoosporangium/ml) was inoculated by spraying on both pre-treated and non-treated tomato plants with the agricultural chemicals. These tomato plants were placed in the isothermal and humid chamber (20°C, relative humidity: over 90%) for three to four days to develop disease. The disease incidence rate and phytotoxicity by the agricultural chemicals were evaluated by the naked eye. The control values were calculated by the above equation (2) and the control effect are shown in Table 3.

Table 3

| Active ingredient | Preparation | Control effect | Phytotoxicity |
|---|---|---|---|
| dimethomorph | example 3 | +++ | - |
| | prep. wp** | +++ | - |
| chlorothalonil | example 6 | ++ | - |
| | comm. wp*** | ++ | - |
| metalaxyl | example 7 | + | - |
| | comm. wp*** | + | - |
| note)<br>+++ : 100%<br>++ : 90 to 99%<br>+ : 80 to 89%<br>- : no phytotoxicity | | | |

\*\*: self-prepared wettable powder.
\*\*\*: commercial wettable powder

Experimental example 4( control effect on cotton aphid and the experiment thereof)

Using the smoke generators obtained from examples 10, and the spray solution obtained from comparative examples 7, the control effect on cotton aphid and phytotoxicity by the agricultural chemicals were evaluated.

The cotton aphids were bred on second-leaf stage cucumber plants the same as used in experimental example 2, wherein the adult cucumbers were used the same as those of the experimental example 2. The 10 experimental plots which are the same size as used in the above experimental example 2(5 replications of control treatment, and 5 replications of the present smoke generator treatment) were prepared, and 10 pots of the adult cucumber plants and 5 pots of the second-leaf stage cucumber plants with the cotton aphids were placed at each plot.

As a control, the spray solution of profenofos was prepared to 280ppm( the recommended concentration of active ingredient as described in The Pesticide User's Manual published by The Korean Pesticide Industrial Society) as the comparative example 7. Five hundreds ml of resulted preparation was sprayed to cucumber plants of each control plot regularly. To the other plots, 3.5 g(dose of five times to the active ingredient contained in 500 ml of the above spray solution) of the present smoke generator obtained from the example 10 was placed and ignited by match, and the test plots were sealed for the smoke generated in order not to be leaked out.

After treating with the agricultural chemicals for 12 hours, all the second-leaf stage cucumber plants were collected. Control effect on cotton aphid were evaluated. Control effect on cotton aphid are shown in Table 4.

Table 4

| Active ingredient | Preparation | Control effect | Phytotoxicity |
|---|---|---|---|
| profenofos | example 10 | +++ | - |
| | aqueous solution of profenofos | +++ | - |
| note)<br>+++ : 100%<br>++ : 90 to 99%<br>+ : 80 to 89%<br>- : no phytotoxicity | | | |

As apparent in the above experimental examples, the smoke generator of the present invention exhibited a high control effect, compared to the conventional ones, and almost the same as the liquid spray. Accordingly, the present smoke generator is very useful for controlling insect pests and plant pathogens at low cost, making up for the defects of the conventional spray preparation and the conventional smoke generator of agricultural chemicals.

## Claims

1.  A smoke generator comprising an active ingredient of agricultural chemicals, a combustible carrier, an oxidizing agent and a binder system, characterised in that the combustible carrier is rice chaff.

2.  The smoke generator according to claim 1, wherein the agricultural chemicals are incorporated in an amount of 0.01 to 40% by weight to the total amount of the smoke generator.

3.  The smoke generator according to any one of the preceding claims, wherein the rice chaff is a dried and pulverized material having a particle size below 30 mesh.

4.  The smoke generator according to any one of the preceding claims, wherein the oxidising agent comprises an organic or inorganic material, which is decomposed by heat at a given temperature to generate oxygen for promoting combustion of the combustible carrier, and the agricultural chemicals.

5.  The smoke generator according to any one of the preceding claims, wherein, the oxidizing agent comprises sodium or potassium salts of chlorite, chlorate, perchlorate, nitrate or nitrite.

6.  The smoke generator according to any one of the preceding claims, wherein the oxidizing agent is incorporated in an amount of 5 to 30% by weight to the total amount of the smoke generator.

7.  The smoke generator according to any one of the preceding claims, wherein the binder comprises water-soluble material, oil-soluble material, reactive adhesive or material being able to fuse below 150°C.

8.  The smoke generator according to claim 7, wherein the binder comprises glue, carboxymethyl cellulose or stearyl alcohol.

9.  The smoke generator according to any one of the preceding claims, wherein the binder is incorporated in an amount of 5 to 30% by weight to the total amount of the smoke generator.

10. A process for preparing a smoke generator comprising agricultural chemicals, a combustible carrier, an oxidizing agent and a binder system, the method being characterised by the steps of mixing dried and powdered rice chaff which constitutes the combustible carrier with the active ingredient of the agricultural chemicals, incorporating the oxidizing agent and the binder, and moulding the resulting mixture into sticks, granules or powders.

## Patentansprüche

1.  Rauchentwickler umfassend einen aktiven Wirkstoff aus landwirtschaftlichen Chemikalien, einen brennbaren Träger, ein Oxidationsmittel und ein Bindemittelsystem, dadurch gekennzeichnet, daß der brennbare Träger Reisspreu ist.

2.  Rauchentwickler nach Anspruch 1, worin die landwirtschaftlichen Chemikalien in einer Menge von 0,01 bis 40 Gew.-% in der Gesamtmenge des Rauchentwicklers enthalten sind.

3.  Rauchentwickler nach einem der vorhergehenden Ansprüche, worin der Reisspreu ein getrocknetes und pulverisiertes Material mit einer Partikelgröße von weniger als 30 mesh ist.

4.  Rauchentwickler nach einem der vorhergehenden Ansprüche, worin das Oxidationsmittel ein organisches oder anorganisches Material umfaßt, welches sich bei einer vorgegebenen Temperatur durch Hitze zersetzt, um Sauerstoff zu entwickeln, um die Verbrennung des brennbaren Trägers und der landwirtschaftlichen Chemikalien zu unterstützen.

5.  Rauchentwickler nach einem der vorhergehenden Ansprüche, worin das Oxidationsmittel Natrium- oder Kaliumsalze des Chlorit, Chlorat, Perchlorat, Nitrat oder Nitrit umfaßt.

6. Rauchentwickler nach einem der vorhergehenden Ansprüche, worin das Oxidationsmittel in einer Menge von 5 bis 30 Gew.-% in der Gesamtmenge des Rauchentwicklers enthalten ist.

7. Rauchentwickler nach einem der vorhergehenden Ansprüche, worin das Bindemittel ein wasserlösliches Material, öllösliches Material, reaktive Klebemittel oder ein Material, das in der Lage ist unterhalb von 150° C zu schmelzen, umfaßt.

8. Rauchentwickler nach Anspruch 7, worin das Bindemittel Klebstoff, Carboxymethylzellulose oder Stearylalkohol umfaßt.

9. Rauchentwickler nach einem der vorhergehenden Ansprüche, worin das Bindemittel in einer Menge von 5 bis 30 Gew.-% in der Gesamtmenge des Rauchentwicklers enthalten ist.

10. Ein Verfahren zur Herstellung eines Rauchentwicklers, umfassend landwirtschaftliche Chemikalien, einen brennbaren Träger, ein Oxidationsmittel und ein Bindemittelsystem, wobei das Verfahren gekennzeichnet ist, durch die Schritte des Mischens des trockenen und pulverisierten Reisspreus, welcher den brennbaren Träger mit dem aktiven Wirkstoff aus den Landwirtschaftlichen Chemikalien bildet, des Zusetzens des Oxidationsmittels und des Bindemittels sowie des Formens des erhaltenen Gemisches in Stangen, Körner oder Pulver.

**Revendications**

1. Fumigène comprenant un ingrédient actif de produits chimiques agricoles, un support combustible, un agent oxydant et un système liant, caractérisé en ce que le support combustible est de la paille de riz.

2. Fumigène selon la revendication 1, dans lequel les produits chimiques agricoles sont incorporés en quantité de 0,01 à 40% en poids par rapport à la quantité totale du fumigène.

3. Fumigène selon l'une quelconque des revendications précédentes, dans lequel la paille de riz est un matériau séché et pulvérisé ayant une taille particulaire inférieure à 30 mesh.

4. Fumigène selon l'une quelconque des revendications précédentes, dans lequel l'agent oxydant comprend un matériau organique ou minéral, qui est décomposé par la chaleur à une température donnée pour générer de l'oxygène afin de promouvoir la comoustion du support combustible, et les produits chimiques agricoles.

5. Fumigène selon l'une quelconque des revendications précédentes, dans lequel l'agent oxydant comprend des sels sodiques ou potassiques de chlorite, de chlorate, de perchlorate, de nitrate ou de nitrite.

6. Fumigène selon l'une quelconque des revendications précédentes, dans lequel l'agent oxydant est incorporé en quantité de 5 à 30% en poids par rapport à la quantité totale du fumigène.

7. Fumigène selon l'une quelconque des revendications précédentes, dans lequel le liant comprend un matériau soluble dans l'eau, un matériau soluble dans les huiles, un adhésif réactif ou un matériau qui est à même de fondre en dessous de 150°C.

8. Fumigène selon la revendication 7, dans lequel le liant comprend de la colle, de la carboxyméthylcellulose ou de l'alcool stéarique.

9. Fumigène selon l'une quelconque des revendications précédentes, dans lequel le liant est incorporé en quantité de 5 à 30% en poids par rapport à la quantité totale du fumigène.

10. Procédé de préparation d'un fumigène comprenant des produits chimiques agricoles, un support combustible, un agent oxydant et un système liant, le procédé étant caractérisé par les étapes consistant à mélanger de la paille de riz séchée réduite en poudre qui constitue le support combustible avec l'ingrédient actif des produits chimiques agricoles, à incorporer l'agent oxydant et le liant, et à mouler le mélange obtenu pour former des bâtonnets, des granulés ou des poudres.